# EUROPÄISCHE PATENTSCHRIFT

(11) **EP 2 406 017 B1**
(45) Veröffentlichungstag und Bekanntmachung des Hinweises auf die Patenterteilung: **30.10.2019**
(21) Anmeldenummer: 10707033.6
(22) Anmeldetag: 05.03.2010
(51) Int. Cl.: B05C 17/005, A61C 9/00

(54) **VORRICHTUNG ZUM AUSBRINGEN EINER FÜLLMASSE**
DEVICE FOR DISPENSING A FILLING MATERIAL
DISPOSITIF POUR DISTRIBUER UNE MATIÈRE DE REMPLISSAGE

(30) Priorität: 11.03.2009 EP 09154942
(43) Veröffentlichungstag der Anmeldung: 18.01.2012
(73) Patentinhaber: Sulzer Mixpac AG, 9469 Haag (CH)
(72) Erfinder: HABIBI-NAINI, Sasan, CH-8486 Rikon (CH); HÜSLER, Florian, CH-6300 Zug (CH)
(74) Vertreter: Manitz Finsterwald Patent- und Rechtsanwaltspartnerschaft mbB
(86) Internationale Anmeldenummer: PCT/EP2010/052827
(87) Internationale Veröffentlichungsnummer: WO 2010/102955

(56) Entgegenhaltungen:
- EP-A- 1 825 927
- WO-A-01/74253
- WO-A-2004/105856
- DE-A1- 10 337 790
- FR-A- 2 661 097
- US-A- 5 397 180
- US-A- 5 413 253
- US-A- 5 722 829
- US-A1- 2007 017 938

## Beschreibung

Die Erfindung betrifft eine Vorrichtung zum Ausbringen einer fluiden Füllmasse. Die Vorrichtung ist an einen statischen Mischer anbringbar, um die Füllmasse, die im statischen Mischer gemischt worden ist, präzise an den Bestimmungsort zu bringen.

Eine Austraganordnung bestehend aus einem Mehrkomponentenaustraggerät und einer Mehrkomponentenkartusche sowie einem statischen Mischer ist beispielsweise aus der EP0730913 bekannt. Eine Mehrkomponentenkartusche umfasst zumindest einen Vorratsbehälter für zu mischende Komponenten, und ist insbesondere als eine Austragkartusche ausgebildet, welche mittels eines Austraggeräts entleerbar ist. Ein derartiges Austraggerät kann Mittel zur Verkleinerung des Füllvolumens des Vorratsbehälters umfassen. Insbesondere kann ein Austraggerät als eine Austragpistole ausgestaltet sein. Der statische Mischer umfasst gemäss dieser vorbekannten Lösung auch ein Verbindungsstück, welches zum Zusammenbau mit der Kartusche bestimmt ist. Der statische Mischer und das Verbindungsstück sind hierbei als ein einziges Bauteil ausgeführt, welches im Spritzgiessverfahren herstellbar ist.

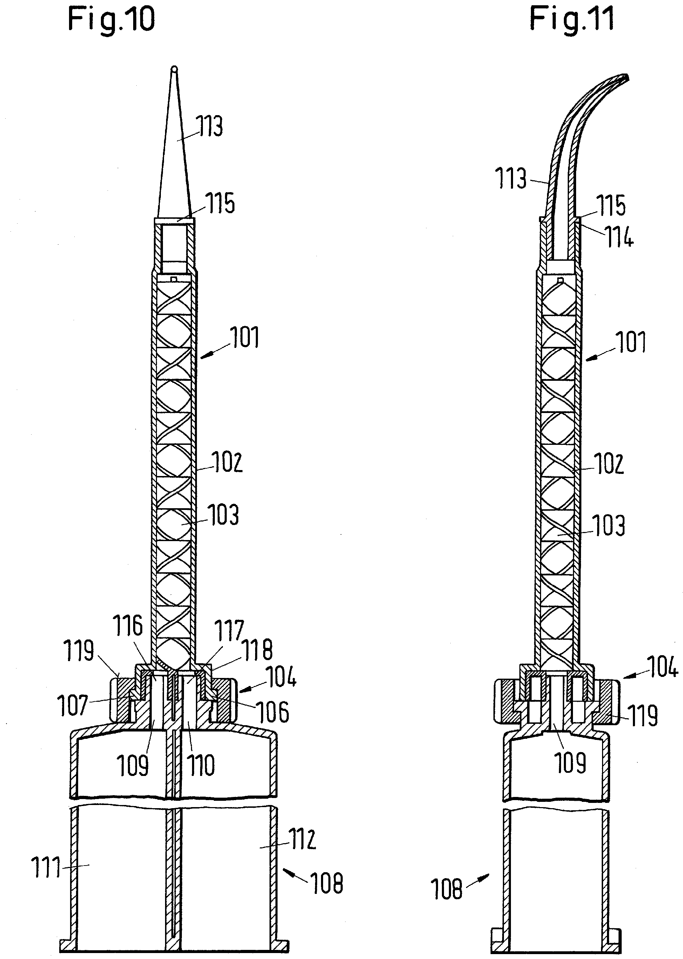

Des weiteren ist bekannt, Aufsätze zu verwenden, die auf das Austrittsende des statischen Mischers aufgesteckt werden. Sie haben die Funktion, die Füllmasse am Einsatzort, beispielsweise einer Klebestelle, präziser aufzutragen. Derartige Aufsätze sind auch bekannt, um Füllmassen in Hohlräume gezielt einzubringen. Diese Aufsätze finden beispielsweise Verwendung zur Füllung von Hohlräumen in Zähnen, die durch eine Zahnbehandlung entstanden sind. Ein derartiger, am Markt erhältlicher Aufsatz ist beispielsweise in Fig. 10 oder Fig. 11 gezeigt.

Aus der WO2004/105856 ist bekannt, ein Röhrchen vorzusehen, mittels welchem die Füllmasse auch in schmale, tiefe Hohlräume eingebracht werden kann. Dieses Röhrchen wird in einem Übergangsstück gehalten, welches ein Einschubende aufweist, das in den Mischerauslass geschoben wird und ein konisches, mit Schlitzen versehenes Rückhalteelement aufweist. Die Schlitze definieren Rückhaltelamellen. Damit das Röhrchen in den Rückhaltelamellen sicher gehalten wird, wird ein Befestigungsstück über das Übergangsstück gestülpt. Hierdurch wird die Breite des Schlitzes verringert, weil die Rückhaltelamellen des Übergangsstücks zusammengepresst werden. Hierdurch erhält das Röhrchen sicheren Halt im Übergangsstück. Die US 5,722,829 A offenbart eine Vorrichtung mit den Merkmalen des Oberbegriffs des Anspruchs 1.

Aufgabe der Erfindung ist es daher, eine Vorrichtung zum Einspritzen einer fluiden Füllmasse vorzuschlagen, bei welchem ein derartiges rohrförmigen Elements sicher fixiert ist und ausserdem ein Druckverlust besonders gering ist. Das rohrförmige Element ist stromabwärts eines statischen Mischers angeordnet.

Diese Aufgabe wird mittels einer Vorrichtung zum Einspritzen einer fluiden Füllmasse nach Anspruch 1 gelöst. Die Vorrichtung umfasst einen statischen Mischer, wobei der statische Mischer ein Gehäuse aufweist, welches einen ersten Hohlraum einschliesst, wobei in dem ersten Hohlraum mindestens ein Mischelement angeordnet ist. Das Gehäuse weist ein Auslasselement auf, wobei das Auslasselement einen zweiten Hohlraum aufweist, wobei der zweite Hohlraum derart mit dem ersten Hohlraum verbunden ist, dass die fluide Füllmasse vom ersten Hohlraum in den zweiten Hohlraum leitbar ist. In dem zweiten Hohlraum ist ein rohrförmiges Element gehalten wobei das Gehäuse als Befestigungselement für das rohrförmige Element ausgebildet ist.

Erfindungsgemäss weist das rohrförmige Element im Bereich seiner Eintrittsöffnung eine Aufweitung zur Fixierung des rohrförmigen Elements im Auslasselement auf.

Das rohrförmige Element kann einen Aussendurchmesser von maximal 3, bevorzugt maximal 2.5, besonders bevorzugt maximal 1.5 mm aufweisen.

Hierdurch ergibt sich für einen maximalen Aussendurchmesser von 3 mm ein maximaler Innendurchmesser von ungefähr 2.5 mm, für einen maximalen Aussendurchmesser von 2.5 mm ein maximaler Innendurchmesser von ungefähr 2 mm, für einen maximalen Aussendurchmesser von 1.5 mm ein maximaler Innendurchmesser von ungefähr 1 mm.

Da die Füllmasse einen mit der Länge des rohrförmigen Elements zunehmenden Druckverlust überwinden muss, weist das rohrförmige Element eine Länge maximal 100 mm, bevorzugt maximal 50 mm, besonders bevorzugt maximal 30 mm auf.

Das Auslasselement umfasst nach einem bevorzugten Ausführungsbeispiel einen Konus. Ein derartiger Konus wird vorgesehen, um den Materialverbrauch des Auslasselements zu reduzieren und um das Auslasselement spritzgiesstechnisch zu optimieren. In Richtung der Mündung des Auslasselements nimmt somit die Wandstärke ab. Eine abnehmende Wandstärke ist spritzgiesstechnisch vorteilhaft, denn die Schmelze, welche das Auslasselement zuletzt erreicht, benötigt eine geringere Abkühlzeit, da weniger Schmelze abgekühlt werden muss, bedingt durch die abnehmende Wandstärke. Somit kann die Gesamtabkühlzeit für die Schmelze durch die Ausgestaltung des Auslasselements als Konus verringert werden.

Auch der zweite Hohlraum kann konisch ausgebildet sein, sodass das rohrförmige Element einfach montiert werden kann und in dem Hohlraum gehalten werden kann. Insbesondere kann das rohrförmige Element an dem Ende, welches in Richtung des statischen Mischers ausgerichtet ist, eine Erweiterung aufweisen, welche in eine derartigen Konus eingepasst werden kann. Wenn der kleinste Innendurchmesser des Konus kleiner ist, als der Aussendurchmesser des rohrförmigen Elements an dem Ende, durch welches die Füllmasse austreten kann, wird das rohrförmige Element in dem Konus durch einen Presssitz gehalten. Der Hohlraum kann auch mehrere, abschnittsweise konische Abschnitte aufweisen, in welchen das rohrförmige Element an mehreren Auflagepunkten gehalten ist.

Der Neigungswinkel des Konus des Auslasselements und des konischen zweiten Hohlraums können sich unterscheiden. Insbesondere kann der Neigungswinkel des Auslasselements grösser als der Neigungswinkel des konischen zweiten Hohlraums sein.

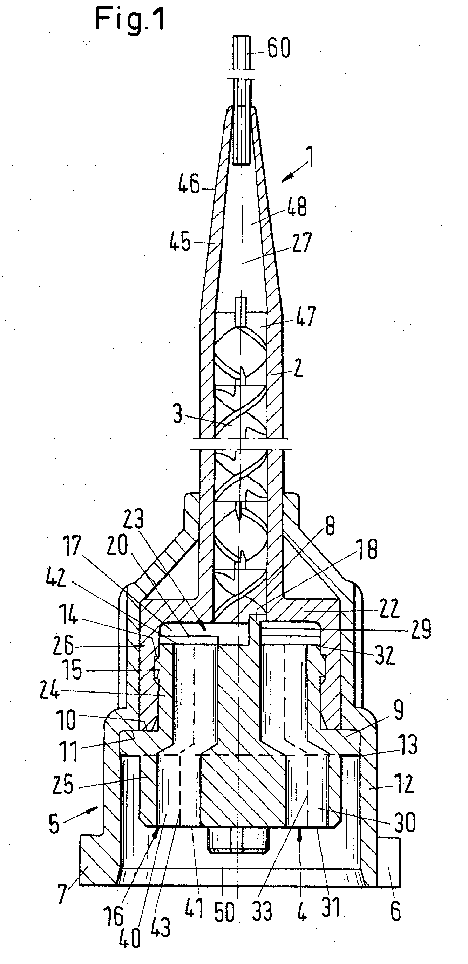

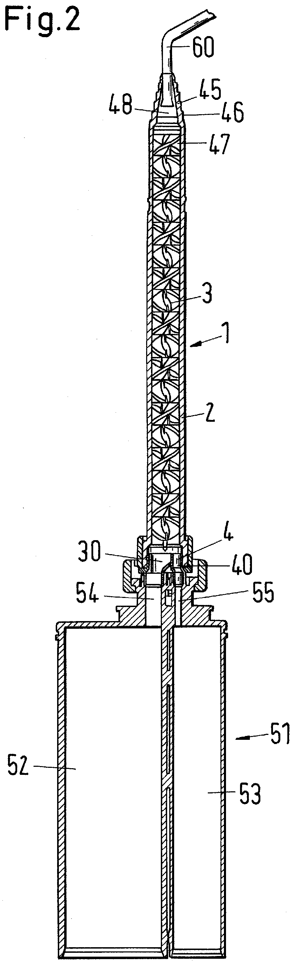

Ein konisch ausgebildeter zweiter Hohlraum ist auch vorteilhaft für die Strömung der Füllmasse. Die Füllmasse muss vom Austrittsende des Mischers herkommend in den Eintrittsquerschnitt des rohrförmigen Elements gefördert werden. Wird der Querschnitt des zweiten Hohlraums nur allmählich und kontinuierlich verringert, kann der Druckverlust dieser Strömung gering gehalten werden. Dies hat wiederum zur Folge, dass der benötigte Anpressdruck, welchen das Austraggerät auf die Kartusche ausübt, geringer sein kann. Der Druckverlust wird auch durch Verwendung eines Zwischenstücks gemäss Fig. 1 oder Fig. 2 zusätzlich verringert, sodass sich durch Kombination des Zwischenstücks und einem Auslasselement, welches einen zweiten Hohlraum aufweist, der konisch ausgestaltet ist, ein besonders niedriger Druckverlust ergibt.

Der zweite Hohlraum weist zumindest über einen Teil seiner Länge einen Innendurchmesser auf, der kleiner als der Aussendurchmesser des rohrförmigen Elements ist. Auch in diesem Fall ergibt sich ein Presssitz. Ein weiterer Vorteil der Verwendung eines Presssitzes ist die Dichtheit gegen den Durchtritt von Füllmasse. Die Füllmasse tritt daher nur durch die Mündungsöffnung des rohrförmigen Elements aus, nicht aber durch einen Spalt zwischen dem rohrförmigen Element und Auslasselement, sodass die gesamte Füllmasse das rohrförmige Element passieren muss, um am gewünschten Einsatzort aufgebracht zu werden.

Das rohrförmige Element ist vorteilhafterweise biegbar, sodass die Lage der Mündungsöffnung des rohrförmigen Elements relativ zum Mischer verändert werden kann. Die Eigenschaft, dass das rohrförmige Element biegbar ist, kann dadurch begründet sein, dass das Material des rohrförmigen Elements selbst biegbar ist. Alternativ oder in Ergänzung hierzu kann das rohrförmige Element zumindest ein Biegeelement umfassen. Ein Biegeelement kann beispielsweise eine Mehrzahl von Verdickungen umfassen. Zwischen benachbarten Verdickungen sind Bereiche mit geringerer Wandstärke angeordnet, die sich leichter verformen lassen als die beiden sich von den Verdickungen erstreckenden Bereiche des rohrförmigen Elements, welche eine grössere Wandstärke aufweisen, als die Wandstärke zwischen benachbarten Verdickungen. Die Verdickungen können beispielsweise als Rippen oder Schuppen ausgebildet sein. Eine Verdickung ist dabei definiert als ein Abschnitt, in welchem die Wandstärke grösser ist als in den beiden unmittelbar anschliessenden Abschnitten. Die Wandstärke kann dabei grösser oder auch gleich wie die Wandstärke des rohrförmigen Elements sein, wesentlich ist, dass die Wandstärke lokal zwischen benachbarten Verdickungen kleiner ist als die Wandstärke des rohrförmigen Elements in Richtung der Eintrittsöffnung oder der Mündungsöffnung

Nach einer weiteren Variante ist das Biegeelement derart ausgebildet, dass das Biegeelement eine gefaltete Struktur aufweist. Die gefaltete Struktur umfasst in einem Axialschnitt gesehen eine Zacke eines Zick-Zack Profils, welches in diesem Ausführungsbeispiel die gefaltete Struktur ausbildet. Diese Zacke besteht aus einer ersten Seite und einer zweiten Seite und einer Kante, die von den beiden Seiten eingeschlossen ist. Die Kante soll fortan als Bergkante bezeichnet werden. In der Regel sind eine Mehrzahl dieser Zacken aneinander gereiht und bilden derart die gefaltete Struktur. Benachbarte Zacken sind über eine Kante verbunden, welche das rechtsseitige Ende der linksseitig angeordneten ersten Zacke mit dem linksseitigen Ende der rechtsseitig angeordneten zweiten Zacke verbindet.. Diese Kante soll in der Folge als Talkante bezeichnet werden. Somit folgt im Bereich des Biegeelements eine erste Bergkante auf eine erste Talkante und eine zweite Talkante schliesst dann die erste Talkante an. Zwischen der ersten Talkante und der zweiten Talkante erstreckt sich die erste Zacke. Auf die erste Zacke folgt eine zweite Zacke, die von der zweiten Talkante und einer dritten Talkante begrenzt ist. Zwischen der zweiten Talkante und der dritten Talkante erhebt sich die zweite Bergkante der zweiten Zacke. Entlang jeder der Kanten wird der Mantel des rohrförmigen Elements geknickt. Die Wandstärke der Kanten entspricht dabei im wesentlichen der Wandstärke der Seiten. Wird das Biegeelement während der Herstellung des rohrförmigen Elements bereits gefertigt, kann die Wandstärke der gefalteten Struktur beliebig eingestellt werden. Die Wandstärke kann insbesondere derart gewählt werden, dass im gefalteten Zustand das rohrförmige Element sich entlang einer geraden Längsachse erstreckt und stabil in der geraden Lage verbleibt. Diese Art der Herstellung eignet sich insbesondere für rohrförmige Elemente, welche im Spritzgiessverfahren in einem einzigen Arbeitsschritt hergestellt werden.

Die gefaltete Struktur kann alternativ dazu auch nach Fertigstellung des Biegeelements durch plastische Verformung des rohrförmigen Elements nachträglich aufgebracht werden. In diesem Fall wird das rohrförmige Element durch Extrusion oder durch ein entsprechendes kontinuierliches Herstellungsverfahren für ein Halbzeug aus einem metallischen Werkstoff hergestellt werden, welches im Anschluss auf die gewünschte Länge zugeschnitten wird und die gefaltete Struktur im Anschluss mittels eines Umformverfahrens aufgebracht werden kann, welches ein Präge- oder Pressverfahren umfassen kann. Für rohrförmige Elemente aus Kunststoff kann hingegen alternativ dazu die gefaltete Struktur unmittelbar im Anschluss an die Extrusion des rohrförmigen Elements 60 aufgebracht werden.

Die gefaltete Struktur bewirkt, dass das rohrförmige Element eine gerade Längsachse aufweist, solange keine Kräfte auf das rohrförmige Element aufgebracht werden, mittels welchen eine Krümmung erzeugbar ist. Werden hingegen Biegekräfte auf das Biegeelement aufgebracht, die normal zur Längsachse gerichtet sind oder zumindest Kraftkomponenten in der Normalrichtung zur Längsachse aufweisen, so wird die gerade Längsachse im Bereich des Biegeelements gekrümmt. Durch die Einwirkung der Biegekräfte kann sich das Biegeelement in den Kanten der Falten plastisch verformen, sodass die Biegung des Biegeelements irreversibel ist und das Biegeelement in der gekrümmten Stellung verharrt. Durch die umlaufende gefaltete Struktur ist zudem eine Knickstabilität gewährleistet. Das heisst, dass die innere Querschnittsfläche des rohrförmigen Elements im Bereich des Biegeelements nicht wesentlich von der inneren Querschnittsfläche der ersten und zweiten Abschnitte abweicht, die sich an das Biegeelement anschliessen.

In Ergänzung zu den vorhergehenden Ausführungen zu einem Biegeelement, das eine gefaltete Struktur umfasst, kann auch vorgesehen werden, dass die gefaltete Struktur unter einer Vorspannung gehalten wird. Insbesondere wenn der zwischen zwei benachbarten Seiten eingeschlossene Winkel klein wird, also gegen null geht, kann eine Vorspannkraft während der Herstellung des rohrförmigen Elements aufgebracht werden, welche die Zacken in einer eng anliegenden Stellung zueinander hält. Das heisst, die Abstände zwischen benachbarten Zacken sind derart gering, dass die Zacken sich aufeinander stützen.

Wenn eine Krümmung auf das Biegelement aufgebracht werden soll, und diese Krümmung des Biegeelements beibehalten werden soll, solange der Austrag der Füllmasse erfolgt, dann wird die Vorspannkraft durch Aufbringen einer Zugkraft auf das Biegeelement überwunden. Durch das Aufbringen einer Zugkraft wird der Winkel, den benachbarte Seiten zueinander einschliessen, vergrössert. Die benachbarten Seiten können sich nunmehr nicht mehr aneinander abstützen und können eine Krümmung nicht mehr behindern. Dann wird eine Kraft aufgebracht, um die gewünschte Krümmung einzustellen. Durch diese Kraft kann sich das Material zumindest in einem Teil der Kanten lokal plastisch verformen, sodass die einmal aufgebrachte Krümmung des Biegeelements beibehalten wird. Insbesondere soll sich zumindest für die Dauer des Austrags der Füllmasse die Krümmung nicht ändern, das heisst, der Krümmungsradius und der Winkel, den die beiden sich vom Biegeelement erstreckenden ersten und zweiten Abschnitte des rohrförmigen Elements zueinander einschliessen.

Das rohrförmige Element weist des weiteren eine Aufweitung des Kanals im Bereich der Eintrittsöffnung auf. Diese Aufweitung dient der Fixierung des rohrförmigen Elements im Auslasselement. Das rohrförmige Element wird fest in dem Hohlraum gehalten und kann insbesondere unter dem Druck der Füllmasse nicht aus dem zweiten Hohlraum ausgeschoben werden. Der Innendurchmesser des zweiten Hohlraums kann zumindest in dem der Austrittsöffnung benachbarten Bereich kleiner als der Aussendurchmesser des rohrförmigen Elements sein, sodass sich eine Presspassung ergibt.

Beim Zusammenbau wird das rohrförmige Element von der Mischerseite her in den zweiten Hohlraum eingesteckt. Dann wird das rohrförmige Element mittels eines Montagewerkzeugs unter Aufwendung einer Druckkraft, beispielsweise durch einen oder einer Serie von Stössen durch den zweiten Hohlraum durchgetrieben, bis das rohrförmige Element zu einem grossen Teil aus der Austrittsöffnung hinausragt. Dabei kann die Aufweitung zur Zentrierung des Montagewerkzeugs und zur Übertragung der Stosskraft dienen.

Alternativ dazu kann in einer nicht erfindungsgemäßen Variante das rohrförmige Element nach einem der vorhergehenden Ausführungsbeispiele auch in das Werkzeug für das Auslasselement bzw. das Mischergehäuse eingelegt werden. Das rohrförmige Element wird in diesem Fall umspritzt, das heisst, während des Spritzgiessverfahrens von einer Kunststoffschmelze umgeben, die anschliessend abgekühlt wird. Nach dieser Variante wird das rohrförmige Element somit in einem einzigen Arbeitsschritt gemeinsam mit der Herstellung des Mischergehäuses eingesetzt. Mit diesem Verfahren kann auch sichergestellt werden, dass die Querschnittsfläche des rohrförmigen Elements an der Eintrittsöffnung gleich wie die Querschnittsfläche des zweiten Hohlraums an dieser Stelle ist.

Das rohrförmige Element wird nach einer weiteren nicht erfindungsgemäßen Variante ohne Aufweitung in das Werkzeug für das Mischergehäuses gelegt. Die Eintrittsöffnung des rohrförmigen Elements wird von einem Werkzeugdorn erfasst, der beweglich ist. Wenn das Werkzeug oder der Werkzeugdorn derart bewegt werden, dass die herzustellende Form des Mischergehäuses erhalten wird, wird der Werkzeugdorn in die Eintrittsöffnung des rohrförmigen Elements eingeführt. Während dieser Bewegung des Werkzeugdorns oder des Werkzeugs wird die Eintrittsöffnung des rohrförmigen Elements gedehnt, das Material des rohrförmigen Elements also einer plastischen Verformung unterzogen. Diese Variante hat den Vorteil, dass ein vorgängiger oder nachträglicher Arbeitsschritt des Aufweitens entfallen kann, da das Aufweiten bereits während der Herstellung des Mischergehäuses und des Auslasselements erfolgen kann.

Alternativ dazu ist es in einer nicht erfindungsgemäßen Variante möglich, das rohrförmige Element nach einem der vorhergehenden Ausführungsbeispiele mittels einer Schnappverbindung oder mittels einer Klebeverbindung oder mittels einer Halteverbindung im zweiten Hohlraum zu befestigen und zu halten.

Des weiteren kann in einer nicht erfindungsgemäßen Variante das rohrförmige Element nach einem der vorhergehenden Ausführungsbeispiele relativ zum statischen Mischer drehbar angeordnet sein.

Erfindungsgemäß ist das rohrförmige Element aus Metall. Ein rohrförmiges Element aus Metall ist einfach herzustellen und kann manuell in eine beliebige Stellung gebogen werden. Der Anwender kann somit in einfacher Weise die Position der Mündungsöffnung des rohrförmigen Elements an den gewünschten Auftragsort der Füllmasse anpassen. Selbstverständlich kann ein Biegeelement nach einem der vorhergehenden Ausführungsbeispiele vorgesehen sein.

Der Vorteil der Verwendung eines rohrförmigen Elements, welches biegbar ist oder eines Biegeelements nach einem der vorhergehenden Ausführungsbeispiele liegt darin begründet, dass eine einmal gewählte Position des rohrförmigen Elements beibehalten wird. Bei der Verformung handelt es sich somit um eine Verformung im plastischen Bereich und nicht um eine Verformung im elastischen Bereich, weil bei letzterer eine Rückstellung in die ursprüngliche Form nach Wegfall der zur Verformung aufgebrachten Kraft verbunden wäre.

Der Mantel aus Metall kann mit einer Kunststoffschicht überzogen sein. Die Verwendung einer Kunststoffschicht ist insbesondere bei Anwendungen vorteilhaft, in welchem die Füllmasse in einem korrosiven Milieu aufgetragen werden muss. Die Verwendung von Kunststoff ist auch im Dentalbereich vorteilhaft, wenn die Füllmasse beispielsweise eine Zahnfüllung oder eine Abformmasse zur Herstellung einer Zahnkrone ist. Kunststoff wird von Patienten als angenehmeres Material empfunden, da es sich wärmer anfühlt und weicher ist als eine metallische Oberfläche.

Alternativ dazu kann in einer nicht erfindungsgemäßen Variante das rohrförmige Element einen Mantel aus Kunststoff umfassen. Das rohrförmige Element kann somit aus einem Kunststoff bestehen, der vorzugsweise biegbar ist oder ein Biegeelement nach einem der vorhergehenden Varianten enthält.

Zur Stabilisierung des rohrförmigen Elements kann in einer nicht erfindungsgemäßen Variante das rohrförmige Element auch ein Kernelement umfassen, welches innerhalb des rohrförmigen Elements angeordnet ist. Das Kernelement kann beispielsweise als Metallstift ausgebildet sein oder ein drahtförmig ausgebildet sein. Insbesondere kann das Kernelement zur Einstellung der Lage der Mündungsöffnung des rohrförmigen Elements verwendet werden. Der Mantel des rohrförmigen Elements kann aus beliebigem, verformbaren Material gefertigt sein. Die Verformung des Materials des Mantels kann in diesem Fall im elastischen Bereich oder im plastischen Bereich liegen. Das rohrförmige Element muss geeignet sein, um die Füllmasse, die aus dem statischen Mischer austritt, an den gewünschten Einsatzort zu leiten. Die Festlegung der Lage der Mündungsöffnung hingegen wird durch das Kernelement übernommen. Das Kernelement kann sich frei im Inneren des rohrförmigen Elements erstrecken oder es kann mittels eines Verbindungselements mit dem rohrförmigen Element verbunden sein. Selbstverständlich können auch mehrere Verbindungselemente an verschiedenen Orten im rohrförmigen Element angeordnet sein.

Alternativ dazu kann in einer nicht erfindungsgemäßen Variante das Kernelement vom Mantel des rohrförmigen Elements zumindest teilweise umschlossen sein. In diesem Fall wird vermieden, dass das Kernelement einen zusätzlichen Strömungswiderstand im rohrförmigen Element erzeugen kann. Der Strömungsweg für die Füllmasse wird weitestgehend frei gehalten.

Das Kernelement kann drahtförmig ausgebildet sein. Insbesondere kann das Kernelement ein Metall enthalten.

Das Kernelement kann alternativ dazu auch vollständig in die Wand des Mantels des rohrförmigen Elements aufgenommen sein. Es können auch mehrere Kernelemente vorgesehen sein, die eine verstärkende Struktur bilden. Die Kernelemente können auch als Faser, Filz, Gewebe oder Gestrick ausgebildet sein, welches von dem Material des Mantels des rohrförmigen Elements zumindest teilweise umgeben oder umschlossen ist.

Der statische Mischer kann insbesondere Verwendung zur Mischung eines aushärtenden Mischguts aus fliessfähigen Komponenten finden.

Eine weitere mögliche Verwendung des statischen Mischers ist die Mischung von Abformmassen im Dentalbereich oder die Mischung von Mehrkomponentenklebstoffen oder die Mischung von aushärtenden Füllmassen im Bausektor, zum Beispiel chemische Dübel bzw. Verankerungen.

Nachfolgend wird die Erfindung anhand der Zeichnungen erläutert. Es zeigen:
- Fig. 1: einen Schnitt durch eine nicht im Schutzbereich der Ansprüche liegenden Vorrichtung zum Einspritzen einer fluiden Füllmasse
- Fig. 2: einen Schnitt durch eine Vorrichtung zum Einspritzen einer fluiden Füllmasse gemäss eines ersten Ausführungsbeispiels der Erfindung
- Fig. 3: einen Schnitt durch ein rohrförmiges Element nach einer ersten Ausführungsform der Erfindung.
- Fig. 4: eine Ansicht auf ein rohrförmiges Element nach einer zweiten Ausführungsform der Erfindung
- Fig. 5: einen Schnitt durch das rohrförmige Element der Fig. 3 entlang der Ebene A-A
- Fig. 6: einen Schnitt einer dritten Ausführungsform des rohrförmigen Elements gemäss der Erfindung
- Fig. 7: einen Schnitt einer vierten Ausführungsform des rohrförmigen Elements, jedoch nicht gemäss der Erfindung
- Fig. 8: einen Schnitt einer fünften Ausführungsform des rohrförmigen, jedoch nicht gemäss der Erfindung
- Fig. 9: einen Schnitt einer sechsten Ausführungsform des rohrförmigen, jedoch nicht gemäss der Erfindung
- Fig. 10: einen Aufsatz aus dem Stand der Technik
- Fig. 11: einen Schnitt durch den Aufsatz der Fig. 10.
- Fig. 12: eine Ansicht auf ein rohrförmiges Element nach einer siebenten Ausführungsform der Erfindung
- Fig. 13: eine weitere Variante für die Herstellung eines rohrförmigen Elements

Fig. 1 zeigt einen Schnitt durch einen statischen Mischer 1 mit einem Zwischenstück 4 und einem rohrförmigen Element einer nicht im Schutzbereich der Ansprüche liegenden Vorrichtung. Dieser statische Mischer für eine Kartusche zur Aufnahme einer oder insbesondere mehrerer Komponenten umfasst ein Mischergehäuse 2, welches zumindest ein statisches Mischelement 3 enthält, insbesondere aus einer Mehrzahl von Mischelementen aufgebaut sein kann, sodass bevorzugt eine Anzahl gleichartiger Mischelemente eine Gruppe von Mischelementen ausbildet. Derartige Mischelemente sind beispielsweise aus der EP749776 B oder der EP1426099 B1 bekannt oder wie in der Darstellung als Wendelmischer mit einer helixförmigen Struktur ausgebildet. Der Mischer hat die Funktion, die einzelnen Komponenten gut zu durchmischen, sodass eine im wesentlichen homogene Mischung entsteht. Der Mischer könnte auch als dynamischer Mischer ausgebildet sein (nicht gezeigt). Ein dynamischer Mischer unterscheidet sich von dem statischen Mischer, indem die Mischelemente relativ beweglich zum Mischergehäuse angeordnet sind.

Der in Fig. 1 gezeigte Mischer kann zur Homogenisierung einer Komponente oder für die Mischung von zwei oder mehreren Komponenten in gleicher Weise verwendet werden. Die Komponenten können zueinander in einem Mischverhältnis stehen, welches von einem 1:1 Mischverhältnis abweicht. Der statische Mischer gemäss Fig. 1 wird an der Kartusche mittels eines ringförmigen Kopplungselements 5 befestigt. Das Kopplungselement 5 enthält den Einlassbereich des Gehäuses 2 des statischen Mischers sowie das Zwischenstück 4, welches einen ersten Kanal 30 und einen zweiten Kanal 40 enthält, welcher je eine Komponente zum statischen Mischer führt. Selbstverständlich können in dem Zwischenstück 4 auch mehr als zwei Kanäle enthalten sein, wenn mehr als zwei Komponenten getrennt voneinander dem statischen Mischer 1 zugeführt werden sollen. Das Kopplungselement 5 ist beispielsweise mittels eines Bayonett-Befestigungsmittels 6,7 an der Kartusche befestigbar. Nach einem nicht dargestellten Ausführungsbeispiel könnte das Kopplungselement auch ein Verbindungselement aufweisen, welches in Gegenelement der Kartusche eingreift, um beispielsweise eine Rastverbindung auszubilden. Der statische Mischer 1 ist somit mittels des Kopplungselements 5 zusammen mit dem Zwischenstück 4 an der Austragkartusche oder dem Austraggerät befestigbar.

Alternativ dazu kann das Kopplungselement 5 ein Aussengewinde aufweisen, mittels welchem es mit der Kartusche verschraubbar ist.

Der Einlassbereich des Gehäuses 2 des statischen Mischers weist ein Einlassende 10 auf, welches der Aufnahme des Zwischenstücks 4 dient. Das Zwischenstück umfasst ein erstes Anschlusselement 24 und ein zweites Anschlusselement 25, die durch einen Halteflansch 9 voneinander getrennt sind. Das erste Anschlusselement 24 ist im Inneren des Einlassbereichs aufgenommen und kann durch einen Rückhalteflansch 14, der in eine umlaufende Nut 15 des Einlassendes 10 eingreift, im Einlassende 10 gehalten werden. Das erste Anschlusselement 24 ist somit zur Aufnahme eines Gehäuses eines statischen Mischers bestimmt. Der an das erste Anschlusselement 24 anschliessende Flansch 9 dient als Auflage für das Einlassende 10 des Gehäuses des statischen Mischers. Das erste Anschlusselement 24 sowie das zweite Anschlusselement 25 sind in diesem Ausführungsbeispiel zylinderförmig, könnten bei gleicher Funktionsweise auch eine viereckige, rautenförmige, rechteckige, runde, ovale oder eine andere, zum zugehörigen Einlassende 10 passende Querschnittsfläche aufweisen. Das erste Anschlusselement 24 kann ein Positionierungselement 29 zur Ausrichtung des statischen Mischers in Bezug auf das Anschlusselement aufweisen. Auch mehrere, insbesondere zwei Positionierungselemente können vorgesehen sein. Diese Massnahme wird vorteilhaft bei Mischern eingesetzt, bei denen die Mischgüte sich in Abhängigkeit von der Position der Mischelemente zu der Position des Zwischenstücks verändert. Insbesondere zeigt das Positionierungselement 29 die optimale Lage des statischen Mischers 1 in bezug auf das Zwischenstück 4 an. Hierzu kann das Positionierungselement 29 als Vorsprung ausgestaltet sein, der auch sichtbar die Position des statischen Mischers 1 in bezug auf das Zwischenstück 4 zeigt und somit auch eine Hilfestellung für den Zusammenbau bietet. Das erste Anschlusselement 24 umfasst eine Mantelfläche, an welcher der Vorsprung angebracht ist. Das zweite Anschlusselement 25 schliesst an der gegenüberliegenden Seite des Flansches 9 an und ist zum Zusammenbau mit der Kartusche bestimmt.

Nach einer weiteren Variante, die hier nicht zeichnerisch dargestellt ist, kann die erste oder die zweite Auslassöffnung 32, 42 derart ausgestaltet sein, dass sie in einer passenden Stellung zum statischen Mischer ausrichtbar ist. Insbesondere ist die Form der Querschnittsfläche zumindest einer der ersten oder zweiten Auslassöffnungen 32, 42 vorzugsweise nicht rotationssymmetrisch, insbesondere oval oder rechteckig oder rautenförmig.

Das erste Anschlusselement 24, der Flansch 9, sowie das zweite Anschlusselement 25 enthalten den ersten und den zweiten Kanal 30,40. Das zweite Anschlusselement 25 kann ein Codierungsmittel umfassen. Das Zwischenstück 4 ist insbesondere derart ausgestaltet, dass der erste Kanal 30 eine erste Mittenachse 33 aufweist und der zweite Kanal 40 eine zweite Mittenachse 43 aufweist. Das zweite Anschlusselement 25 umfasst ein erstes Codierungsmittel 50 und gegebenenfalls ein zweites Codierungsmittel. Das erste Codierungsmittel 50 kann insbesondere bezüglich einer Ebene, die von den ersten und zweiten Mittenachsen 33,43 der Kanäle 30,40 aufgespannt wird, gegenüberliegend zum zweiten Codierungsmittel angeordnet sein.

Insbesondere ist das erste Codierungsmittel 50 als Arm ausgebildet, wobei der Arm auch als Steg bezeichnet werden kann. Der Arm weist ein Fingerelement auf, das zum Eingriff in eine zugehörige Ausnehmung des Austraggeräts oder der Austragkartusche bestimmt ist. Das Fingerelement kann als eine axiale Leiste ausgebildet sein, die zum Eingriff in eine zugehörige Nut der Kartusche bestimmt ist.

Das Codierungsmittel 50 kann auch als Nut im äusseren Mantel des zweiten Anschlusselements 25 ausgestaltet sein, was hier nicht zeichnerisch dargestellt ist.

Wenn zwei oder mehr Codierungsmittel 50 vorgesehen sind, müssen die Codierungsmittel auch nicht gegenüberliegend zueinander angeordnet sein. Sind zwei oder mehr Codierungsmittel vorgesehen, sollte sich die Querschnittsfläche zumindest eines der Codierungsmittel von der Querschnittsfläche, des oder der weiteren Codierungsmittel unterscheiden, insbesondere wenn die Codierungsmittel symmetrisch zueinander angeordnet sind.

Alternativ dazu können mehrere Codierungsmittel 50 auch eine asymmetrische Anordnung auf der Einlassseite aufweisen. Durch die asymmetrische Anordnung, die sich in gleicher Weise auf der Austragkartusche oder dem Austraggerät wiederfindet, kann eine eindeutige Positionierung des Zwischenstücks und damit des mit dem Zwischenstück verbindbaren statischen Mischers zu der Austragkartusche oder dem Austraggerät erfolgen.

Die Querschnittsfläche der ersten Einlassöffnung 31 kann sich von der Querschnittsfläche der zweiten Einlassöffnung 41 unterscheiden. Das Element 16 hat in dieser Ausführungsform die Funktion eines optischen Codierungsmittels. Ein beispielsweise als ovale, mehreckige, insbesondere viereckige oder rautenförmige Querschnittsfläche ausgestaltetes Element 16 ist optisch klar erkennbar, sodass der statische Mischer 1 beim Zusammenbau in eindeutiger Position zu dem Element 16 ausgerichtet werden kann. Die Form der Querschnittsfläche zumindest einer der ersten oder zweiten Einlassöffnungen 31, 41 ist vorzugsweise nicht rotationssymmetrisch, insbesondere oval oder mehreckig, insbesondere rechteckig oder rautenförmig.

Das Zwischenstück 4 wird über den Rückhalteflansch 14 im Gehäuse 2 des Mischers gehalten. Der Flansch 9 ist an das Einlassende 10 des Gehäuses 2 angepasst und liegt an einer Schulter 11 der Innenwand des Kopplungselements 5 an. Das Zwischenstück 4 weist eine Stirnfläche 20 an seiner auslassseitigen Endplatte auf. Diese Stirnfläche 20 kann mit einem Leitelement, das insbesondere als Trennkante 17 und/oder als Teilsperre 18 ausgebildet ist, zur Umlenkung der Komponentenströme ausgestattet sein, sodass die Komponenten im wesentlichen senkrecht zur Längsachse 27 des Mischers und parallel zur Stirnfläche 20 gegen eine Teilerkante 8 fliessen müssen. Die Teilerkante 8 ist die dem Zwischenstück 4 zugewandte Kante des ersten statischen Mischelements 3, welches in Kontakt mit den beiden Komponenten kommt.

Die Stirnfläche 20 enthält die beiden Auslassöffnungen 31,41 der Kanäle 30, 40. An der Stirnfläche 20 ist die Trennkante 17 derart angebracht, dass jede Komponente, die durch die beiden Auslassöffnungen 31, 41 austritt, durch die Trennkante 17 bereits in zwei Teilströme, insbesondere zwei Hälften, unterteilt wird. Die Teilströme jeder der Komponenten vereinigen sich in einer Sammelkammer 23. Anschliessend werden die Ströme in der Sammelkammer durch die Teilerkante 8 des statischen Mischers erneut geteilt. Vorteilhafterweise stehen die Trennkante 17 und die Teilerkante 8 normal aufeinander. Dies hat den Vorteil, dass der Komponentenstrom in zwei Teilströme unterteilt wird, die sich in ihrer Zusammensetzung von den durch die Trennkante 17 erzeugten Teilströmen unterscheiden. Hierdurch ergibt sich bereits eine erste Mischstufe noch vor dem Eintritt der Komponenten in die statischen Mischelemente 3 des statischen Mischers 1. Insbesondere, wenn das Mischverhältnis der Komponenten von einem 1:1 Mischverhältnis abweicht, entspricht die Teilung jeder Komponente in zumindest zwei Teilströme und die anschliessende Vereinigung jedes der Teilströme einer ersten Mischstufe, weil dann gewährleistet wird, dass die Komponente, die den kleineren Volumenanteil hat, zu gleichmässigen Teilen in das erste Mischelement 3 des statischen Mischers eintritt. Jeder der Teilströme enthält somit einen Anteil der ersten und der zweiten Komponente, welcher dem Mischverhältnis entspricht. Durch diese erste Mischstufe werden somit die Eintrittsbedingungen in den statischen Mischer verbessert. Zusätzlich zur Trennkante 17 können eine Teilsperre 18 und weitere Einbauten zur Umleitung der Strömung in Richtung der beiden Teilräume des durch die Teilerkante 8 unterteilten Mischraums des statischen Mischers vorgesehen sein.

Die Trennkante 17 erstreckt sich gemäss Fig. 1 von der Stirnfläche 20 bis zu einem Absatz 22 des Gehäuses 2 des statischen Mischers, das den Sammelraum 23 umschliesst. Der Absatz 22 verbindet den Einlassbereich des Gehäuses 2, der vom Einlassende 10 bis zu einer Innenfläche 21 reicht, mit dem Mischraum, welcher die statischen Mischelemente 3 enthält.

Beim Zusammenbau wird in einem ersten Schritt das rohrförmige Element in den zweiten Hohlraum des Auslasselements des Gehäuses 2 eingeschoben. Dann werden die Mischerelemente 3 in das Gehäuse 2 des statischen Mischers 1 positioniert. In einem zweiten Schritt wird das Zwischenstück 4 mit dem Einlassbereich 26 des Gehäuses 2 verbunden, beispielsweise über den Halteflansch 14, welcher für den Eingriff in die Nut 15 bestimmt ist, welche entlang der Innenwand des Einlassbereichs 26 verläuft. Hierzu wird das Element 16 optisch zum statischen Mischer ausgerichtet, sodass der statische Mischer 1 und das Zwischenstück 4 in genau einer passenden Lage zueinander zusammengebaut werden. Sodann werden der statische Mischer 1 sowie das Zwischenstück 4 in das Kopplungselement 5 eingeführt. Das Zwischenstück 4 ist mit einem Flansch 9 ausgestattet, der in eine Nut 13 eingreift, die sich auf der Innenseite der Wand 12 befindet. Das Kopplungselement 5 wird sodann über die Bayonett-Befestigungsmittel 6, 7 mit dem Austraggerät oder der Austragkartusche verbunden. Diese Verbindung kommt nur zustande, wenn das Codierungsmittel 50 in ein Aufnahmemittel des Austraggeräts oder der Austragkartusche eingreift. In diesem Zustand ist das System vorbereitet zur Mischung der Komponenten.

Fig. 2 zeigt einen Schnitt durch einen statischen Mischer gemäss eines ersten Ausführungsbeispiels der Erfindung, der mit einer Kartusche zu einer Einheit zusammengebaut ist. Das Zwischenstück 4 ist aus dem ersten Anschlusselement 24, dem Flansch 9 sowie dem zweiten Anschlusselement 25 aufgebaut. Mehrere Kanäle 30, 40 verlaufen durch das erste Anschlusselement 24, den Flansch 9 und das zweite Anschlusselement 25. Durch die Kanäle 30, 40 werden zu mischende Komponenten von einem Austraggerät oder einer Austragkartusche zu einem statischen Mischer 1 geleitet, in welchem die beiden Komponenten aufeinander treffen und vermischt werden. Es gibt eine Vielzahl von verschiedenen Austraggeräten oder Austragkartuschen, welche der Aufbewahrung und dem Transport der einzelnen Komponenten dienen. Des weiteren werden je nach gewünschtem Mischverhältnis und benötigtem Durchsatz unterschiedliche Typen von statischen Mischern eingesetzt. Diese statischen Mischer können sich durch ihre Einbauten unterscheiden, wodurch sich die Strömungsgeschwindigkeit und die Strömungsführung ändert, sie können unterschiedliche Aussendurchmesser aufweisen, sodass unterschiedliche Volumenströme verarbeitbar sind, somit ein für den Typ des statischen Mischers charakteristischer Durchsatz erzielbar ist.

Dem Anwender stehen somit je nach Bedarf eine Vielfalt von Kombinationsmöglichkeiten zur Verfügung. Um aber beliebige Austraggeräte oder Austragkartuschen mit beliebigen Mischern kombinieren zu können, wird das Zwischenstück 4 eingesetzt. Die Kanäle 30, 40 des Zwischenstücks 4 weisen Einlassöffnungen 31, 41 auf, die in ein Austragmittel eines Austraggeräts oder Austragkartusche eingreifen oder in welche ein Austragmittel eingreifen kann. Das zweite Anschlusselement 25 kann auch aus zwei Rohrstücken aufgebaut sein, welche von der Einlassseite des Flansches 9 wegragen. Diese Rohrstücke werden beim Zusammenbau mit einem Austraggerät oder einer Austragkartusche von entsprechenden Auslassöffnungen des Austragmittels aufgenommen, also in diese Auslassöffnungen des Austraggeräts oder der Austragkartusche eingesteckt, sie stellen daher eine Ausführungsform einer Einsteckverbindung dar. Damit das Zwischenstück 4 sich in der korrekten Position zu dem Austraggerät oder der Austragkartusche befindet, kann ein Codierungsmittel 50 vorgesehen werden.

Fig. 2 zeigt einen Schnitt durch eine Vorrichtung zum Einspritzen einer fluiden Füllmasse gemäss eines ersten Ausführungsbeispiels der Erfindung. Die Vorrichtung ist Teil einer Einrichtung, die einen statischen Mischer 1, ein Zwischenstück 4 und eine Kartusche 51 umfasst. Der statische Mischer 4 ist über das Zwischenstück 4 mit einer Kartusche 51 verbunden. Diese Kartusche umfasst eine erste Vorratskammer 52 und eine zweite Vorratskammer 53. Das Füllvolumen der ersten Vorratskammer 52 unterscheidet sich von dem Füllvolumen der zweiten Vorratskammer 53.

Diese Einrichtung wird verwendet, um zwei Komponenten in unterschiedlichen Mischungsverhältnissen zu vermischen, wobei das Mischungsverhältnis insbesondere 4:1 oder 10:1 betragen kann. Ein nicht dargestelltes Austraggerät kann dazu verwendet werden, die in der ersten und zweiten Vorratskammer befindliche Füllmasse über das Zwischenstück 4 in den statischen Mischer zu fördern. Das Zwischenstück weist hierzu einen ersten Kanal 30 und einen zweiten Kanal 40 auf. Die Einlassöffnung 31 des ersten Kanals 30 und die Einlassöffnung 41 des zweiten Kanals 40 sind in diesem Ausführungsbeispiel an rohrförmige Stutzen angeordnet, die in entsprechende erste und zweite Austrittskanäle 54, 55 für die Komponenten der Füllmasse eingreifen. Der erste Austrittskanal 54 ist im Anschluss an die erste Vorratskammer 52 angeordnet und der zweite Austrittskanal 55 ist im Anschluss an die zweite Vorratskammer 53 angeordnet.

Die aus dem statischen Mischer 1 austretende Füllmasse gelangt in das Auslasselement 45. Auch in diesem Ausführungsbeispiel ist das Auslasselement 45 als Konus 46 ausgestaltet. Der Konus 46 enthält einen zweiten Hohlraum 48, der geeignet ist, die aus dem ersten Hohlraum 47 austretende Füllmasse aufzunehmen und zu fördern. Der Hohlraum 47 wird durch den Innenraum des Mischergehäuse 2 gebildet und enthält zumindest ein statisches Mischelement 3.

Im zweiten Hohlraum 48 ist ein rohrförmiges Element 60 angeordnet, welches zur Ausbringung der Füllmasse an den Bestimmungsort dient. Das rohrförmige Element 60 wird nachfolgend genauer beschrieben.

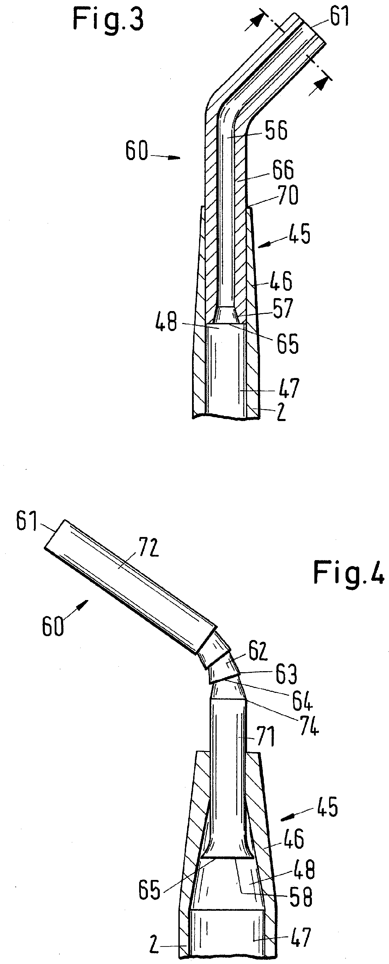

Fig. 3 zeigt einen Schnitt durch ein rohrförmiges Element nach einer ersten Ausführungsform der Erfindung. Das rohrförmige Element 60 ist in dem Auslasselement 45 aufgenommen. Das Auslasselement 45 ist im Anschluss an das Mischergehäuse 2 angeordnet und erfindungsgemäß einstückig mit dem Mischergehäuse 2. Das Mischergehäuse 2 enthält einen ersten Hohlraum 47, der als geschlossener Kanal für die Füllmasse dient. Der erste Hohlraum 47 geht in den zweiten Hohlraum 48 über, der das rohrförmige Element 60 enthält. Das rohrförmige Element 60 ist teilweise in dem zweiten Hohlraum 48 aufgenommen und ragt über die Austrittsöffnung 70 des Auslasselements 45 hinaus. Das rohrförmige Element 60 enthält einen geschlossenen Kanal 56, welcher zur Förderung der Füllmasse vom ersten oder zweiten Hohlraum 47, 48 zur Mündungsöffnung 61 des Kanals 56 führt.

Das rohrförmige Element 60 ist biegbar und ist in der Fig. 3 mit einer Krümmung gezeigt. Hierdurch kann die Lage der Mündungsöffnung 61 des rohrförmigen Elements 60 relativ zum statischen Mischer 1 verändert werden. Die Eigenschaft, dass das rohrförmige Element 60 biegbar ist, kann einerseits dadurch begründet sein, dass das Material des rohrförmigen Elements 60 biegbar ist.

Das rohrförmige Element 60 weist des weiteren eine Aufweitung des Kanals 56 im Bereich der Eintrittsöffnung 65 auf. Diese Aufweitung dient der Aufnahme eines Montagewerkzeugs. In die Aufweitung kann ein Montagewerkzeug eingreifen, um das rohrförmige Element im zweiten Hohlraum zu positionieren und zu haltern. Mittels des Montagewerkzeugs kann ein Stoss auf das rohrförmige Element ausgeübt werden, wodurch das rohrförmige Element 60 fest in dem Hohlraum 48 gehalten wird. Der Innendurchmesser des zweiten Hohlraums 48 ist zumindest in dem der Austrittsöffnung 70 benachbarten Bereich kleiner als der Aussendurchmesser des rohrförmigen Elements 60.

Beim Zusammenbau wird das rohrförmige Element 60 von der Mischerseite her in den zweiten Hohlraum 48 eingesteckt. Dann wird das rohrförmige Element mittels eines Montagewerkzeugs unter Aufwendung einer Druckkraft, beispielsweise durch einen oder einer Serie von Stössen durch den zweiten Hohlraum 48 durchgetrieben, bis das rohrförmige Element zu einem grossen Teil aus der Austrittsöffnung 70 hinausragt. Dabei dient die Aufweitung 57 zur Zentrierung des Montagewerkzeugs und zur Übertragung der Stosskraft.

Fig. 4 zeigt eine Ansicht auf ein rohrförmiges Element 60 nach einer zweiten Ausführungsform der Erfindung, welches alternativ oder in Ergänzung zu dem in Fig. 3 gezeigten rohrförmigen Element 60 zumindest ein Biegeelement 62 umfasst. Ein Biegeelement 62 kann beispielsweise eine Mehrzahl von Verdickungen 63 umfassen. Zwischen benachbarten Verdickungen 63 sind Bereiche mit geringerer Wandstärke, beispielsweise Einschnürungen 64 angeordnet, die sich leichter verformen lassen, als die beiden sich von den Verdickungen erstreckenden ersten und zweiten Enden 71, 72 des rohrförmigen Elements 60. Diese ersten und zweiten Enden 71, 72 weisen eine grössere Wandstärke auf, als die Einschnürungen 64. Selbstverständlich kann auch eine einzige Einschnürung 64 vorgesehen sein. Die Einschnürung kann auch einen Bereich mit einer verringerten Wandstärke umfassen, der sich zwischen dem ersten Ende 71 und dem zweiten Ende 72 erstreckt. Die Verdickungen 63 können beispielsweise als Rippen oder Schuppen ausgebildet sein. Die Verdickungen können auch ein wellenförmiges Profil aufweisen. Eine Verdickung ist dabei definiert als ein Abschnitt, in welchem die Wandstärke grösser ist als in den beiden unmittelbar anschliessenden Abschnitten. Die Wandstärke kann dabei grösser oder auch gleich wie die Wandstärke des rohrförmigen Elements 60 im Bereich des ersten oder zweiten Endes 71, 72 sein. Wesentlich ist, dass die Wandstärke lokal zwischen benachbarten Verdickungen kleiner ist als die Wandstärke des rohrförmigen Elements von der dem ersten Ende 71 nächstgelegenen Einschnürung 74 bis zur Eintrittsöffnung 65 oder von der dem zweiten Ende 72 nächstgelegenen Einschnürung 73 bis zur Mündungsöffnung 61. Die Wahl der Anzahl und des Profils der Einschnürungen ist bevorzugt so auszugestalten, dass sich eine Krümmung des rohrförmigen Elements 60 ergibt, die längs einer Krümmungskurve erfolgt, deren Radius konstant oder kontinuierlich veränderlich ist. Es ist vorteilhaft, wenn das rohrförmige Element keinen Knick oder allenfalls eine Mehrzahl von kleinen Knicken aufweist, sodass die Strömung des Fluids im Krümmungsbereich möglichst wenig abrupt umgelenkt wird.

Auch gemäss dieses Ausführungsbeispiels weist das rohrförmige Element 60 eine Aufweitung 58 auf. Die Aufweitung umfasst in diesem Fall nicht nur den Kanal 56, der in dieser Darstellung nicht sichtbar ist, sondern auch den Mantel 66 des rohrförmigen Elements 60.

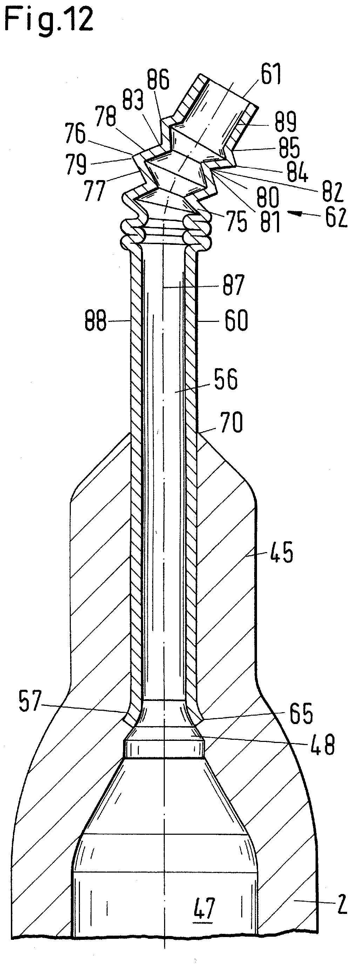

Die Aufweitung 58 kann gemäss des Ausführungsbeispiels nach Fig. 4 oder gemäss Fig. 12 bereits an dem rohrförmigen Element angebracht sein, bevor es in das Auslasselement 45 eingebaut wird, sie kann aber auch als Folge des Eingriffs des Montagewerkzeugs entstehen.

Eine Aufweitung gemäss des Ausführungsbeispiels der Fig. 4 sowie der Fig. 12 hat den weiteren Vorteil, dass die Füllmasse im Bereich der Eintrittsöffnung 65 weniger rückstaut. Der Übergang vom zweiten Hohlraum 48 mit einem Durchmesser, der im wesentlichen dem Durchmesser des statischen Mischers entspricht zu dem Kanal 56, dessen Durchmesser maximal rund einen Millimeter beträgt erfolgt somit allmählich, da die Aufweitung 57 zu einer Verengung des Durchtrittsquerschnitts für die Füllmasse führt. Die Verminderung des Durchtrittsquerschnitts für die Füllmasse, gesehen in Strömungsrichtung führt zu geringem Druckverlust und demzufolge zu einer Reduktion des Druckgefälles von den Vorratsbehältern der Kartusche bis zur Mündungsöffnung 61 des rohrförmigen Elements.

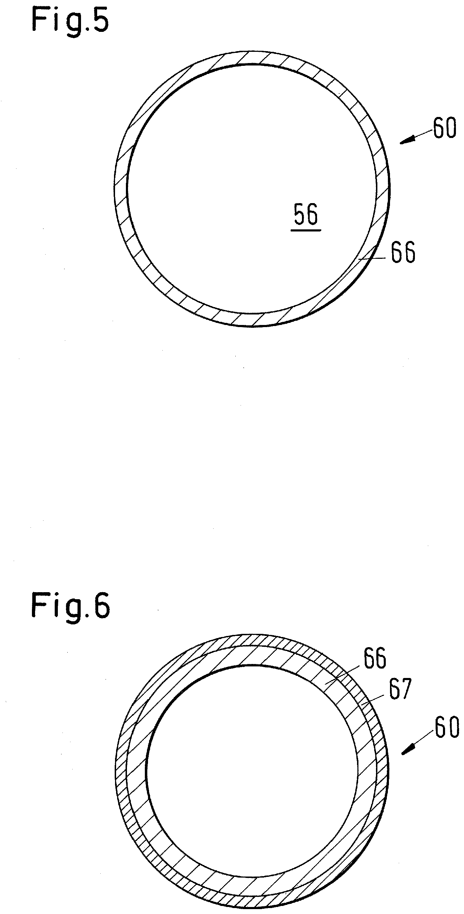

Fig. 5 zeigt einen Schnitt durch das rohrförmige Element 60 der Fig. 3 entlang der Ebene A-A. Es zeigt den Mantel 66 des rohrförmigen Elements sowie den Kanal 56 für die Füllmasse, der in Längsrichtung durch das rohrförmige Element 60 verläuft. Erfindungsgemäß ist das rohrförmige Element 60 aus Metall. Ein rohrförmiges Element 60 aus Metall ist einfach herzustellen und kann manuell in eine beliebige Stellung gebogen werden, ist somit biegbar. Der Anwender kann somit in einfacher Weise die Position der Mündungsöffnung 61 des rohrförmigen Elements 60 an den gewünschten Auftragsort der Füllmasse anpassen.

Fig. 6 zeigt einen Schnitt gemäss einer dritten Ausführungsform des rohrförmigen Elements 60 gemäss der Erfindung. Der Mantel 66 aus Metall oder einem biegbaren Kunststoff kann mit einer Kunststoffschicht 67 überzogen sein.

Das rohrförmige Element 60 kann in einer nicht erfindungsgemäßen Variante auch aus einem Kunststoff bestehen, der ein Biegeelement 62 nach einer der vorhergehenden Varianten enthält.

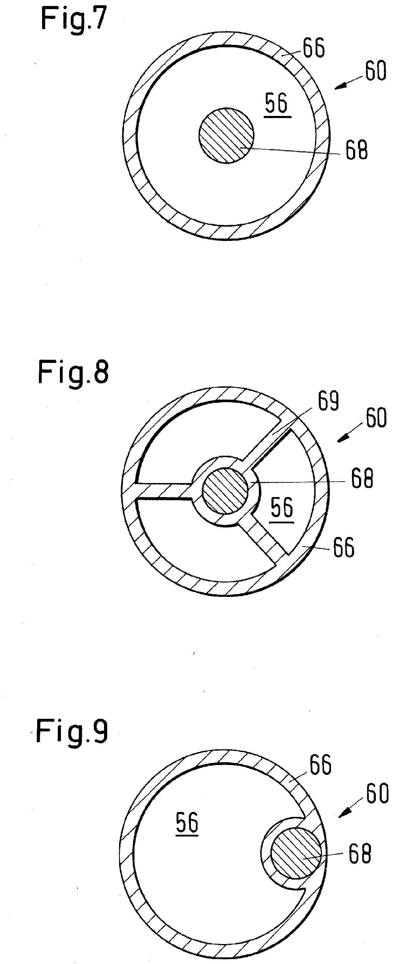

Fig. 7 zeigt einen Schnitt, der eine vierte Ausführungsform des rohrförmigen Elements 60 darstellt, wobei zur Stabilisierung des rohrförmigen Elements 60 ein Kernelement 68 vorgesehen sein kann, welches innerhalb des rohrförmigen Elements 60 angeordnet ist. Das Kernelement 68 kann beispielsweise als Metallstift ausgebildet sein oder ein drahtförmig ausgebildet sein. Das Kernelement wird zur Einstellung der Lage der Mündungsöffnung 61 des rohrförmigen Elements 60 verwendet.

Der Mantel 66 des rohrförmigen Elements 60 kann aus beliebigem, verformbaren Material gefertigt sein. Die Verformung des Materials des Mantels 66 kann in diesem Fall im elastischen Bereich oder im plastischen Bereich liegen. Das rohrförmige Element 60 muss geeignet sein, um die Füllmasse, die aus dem ersten Hohlraum 47 des statischen Mischers 1 austritt, in den zweiten Hohlraum 48 eintritt und von diesem in den Kanal 56 des rohrförmigen Elements 60 gelangt, an den gewünschten Einsatzort zu leiten. Die Festlegung der Lage der Mündungsöffnung 61 wird durch das Kernelement 68 vorgenommen. Das Kernelement 68 erstreckt sich gemäss Fig. 7 frei im Inneren des rohrförmigen Elements 60, ist also im Kanal 56 angeordnet. Wird das rohrförmige Element gebogen, hat dies zur Folge, dass das Kernelement 68 ebenfalls gebogen wird. Das Kernelement wird beim Biegevorgang plastisch verformt. Der Mantel 66 des rohrförmigen Elements kann ebenfalls plastisch verformt werden, kann aber auch elastisch verformt werden. Allerdings wird die Biegung durch das plastisch verformte Kernelement 68 aufrecht erhalten. Die elastischen Rückstellkräfte, die auf den Mantel 66 des rohrförmigen Elements wirken, reichen nicht aus, um die plastische Verformung des Kernelements 68 rückgängig zu machen. Daher verbleibt das rohrförmige Element in der Lage, die durch den Biegevorgang vorgegeben worden ist, solange nicht ein weiterer Biegevorgang eingeleitet wird.

Fig. 8 zeigt einen Schnitt der eine fünfte Ausführungsform des rohrförmigen Elements 60, welches im Unterschied zu Fig. 7 mittels eines Verbindungselements 69 mit dem Kernelement 68 verbunden ist. Selbstverständlich können auch mehrere Verbindungselemente 69 an verschiedenen Orten im rohrförmigen Element 60 angeordnet sein. Das Verbindungselement 69 liegt somit direkt im Kanal 56 der Strömung der Füllmasse. Durch eine geeignete Anordnung des Verbindungselements 69 oder einer Mehrzahl von Verbindungselementen kann eine zusätzliche Durchmischung der Füllmasse erfolgen.

Fig. 9 zeigt einen Schnitt einer sechsten Ausführungsform eines rohrförmigen Elements 60, jedoch nicht gemäss der Erfindung, welche alternativ zu den in Fig. 7 oder Fig. 8 gezeigten Ausführungsformen ein Kernelement 68 zeigt, das vom Mantel 66 des rohrförmigen Elements 60 zumindest teilweise umschlossen ist. In der vorliegenden Darstellung umgibt der Mantel 66 das Kernelement 68 vollständig. Diese Variante hat den besonderen Vorteil, dass man bei der Auswahl des Materials des Kernelements 68 nicht darauf Rücksicht zu nehmen braucht, ob das Material des Kernelements 68 mit der Füllmasse verträglich ist, da das Kernelement 68 nicht mit der Füllmasse in Kontakt steht. In diesem Fall wird möglichst vermieden, dass das Kernelement 68 einen zusätzlichen Strömungswiderstand im rohrförmigen Element 60 erzeugen kann. Der Strömungsweg für die Füllmasse durch den Kanal 56 wird nach diesem Ausführungsbeispiel weitestgehend frei gehalten.

Das Kernelement 68 kann in den in Fig. 6,7,8 dargestellten Ausführungsbeispielen jeweils drahtförmig ausgebildet sein. Insbesondere kann das Kernelement 68 ein Metall enthalten. Das Kernelement 68 kann auch von einem Material ummantelt sein oder mit einem Material beschichtet sein, das gut mit der Füllmasse verträglich ist oder andere für die Anwendung spezifische Vorteile aufweist, wie beispielsweise gute haptische oder optische Eigenschaften oder bessere Verträglichkeit insbesondere beim Einsatz im Dentalbereich.

Das Kernelement 68 kann alternativ dazu auch vollständig in die Wand des Mantels des rohrförmigen Elements aufgenommen sein, was zeichnerisch nicht dargestellt ist. Es können auch mehrere Kernelemente vorgesehen sein, die eine verstärkende Struktur bilden. Die Kernelemente können einzeln in dem Mantel eingelegt sein oder untereinander verbunden sein. Die Kernelemente können auch als gitterförmige Struktur, als Faser, Filz, Gewebe oder Gestrick ausgebildet sein, welches von dem Material des Mantels des rohrförmigen Elements zumindest teilweise umgeben oder umschlossen ist.

Fig. 10 zeigt einen statischen Mischer 101, welcher auf einer Kartusche 108 angebracht ist, sowie einen Aufsatz aus dem Stand der Technik. Die Kartusche 108 umfasst einen ersten Vorratsbehälter 111 und einen zweiten Vorratsbehälter 112. Der erste Vorratsbehälter 111 enthält eine erste Komponente einer fluiden Füllmasse und der zweite Vorratsbehälter 112 enthält eine zweite Komponente der fluiden Füllmasse. Die erste Komponente ist durch den ersten Kanal 109 in das Mischergehäuse 102 förderbar, die zweite Komponente ist durch den zweiten Kanal 110 in das Mischergehäuse förderbar. Der erste Kanal 109 und der zweite Kanal 110 sind in rohrförmigen Stutzen 116, 117 geführt, welche Teil der Kartusche 108 sind.

Auf den rohrförmigen Stutzen wird ein Einlasselement 118 angebracht, welches einstückig mit dem Mischergehäuse 102 ausgebildet ist. Das Einlasselement 118 weist zwei Vorsprünge 106, 107 auf, welche mit einem Befestigungsmittel 119 im Eingriff stehen, um den statischen Mischer in fester Verbindung mit der Kartusche 108 zu halten.

Nach dem Austritt aus den Kanälen 109 und 110 vereinigen sich die beiden Komponenten zu einem einzigen Strom, welcher die fluide Füllmasse ausbildet. Diese Füllmasse wird durch Anbringen eines Anpressdrucks auf die Vorratsbehälter 111 und 112 durch die Kanäle 109 und 110 gefördert und im Inneren des Mischergehäuses durch die statischen Mischelemente 103 geleitet und gelangt im Anschluss an den statischen Mischer zu dem Aufsatz 113. Der Aufsatz 113 ist in der vorliegenden Darstellung auf das Austrittsende des statischen Mischers aufgesteckt und hat daher einen Durchmesser, der an die Austrittsöffnung 114 des statischen Mischers 101 angepasst ist, was im Schnitt in Fig. 11 gezeigt ist.

Fig. 11 zeigt einen Schnitt durch den Aufsatz 113 der Fig. 10. Der Aufsatz 113 ist ein konisches Kunststoffrohr, welches ungefähr 20 mm lang ist. An der Spitze des Konus beträgt sein Aussendurchmesser ungefähr 3 mm und sein Innendurchmesser ungefähr 1.5 mm. Der Aussendurchmesser an der Kopplungsstelle zur Austrittsöffnung 114 des statischen Mischers entspricht zumindest dem Innendurchmesser der Austrittsöffnung 114. In Fig. 10 ist des weiteren ein ringförmiger Anschlag 115 gezeigt, dessen Durchmesser dem Aussendurchmesser der Austrittsöffnung 114 entspricht.

Fig. 12 zeigt einen Schnitt durch ein rohrförmiges Element nach einer weiteren Ausführungsform der Erfindung. Das rohrförmige Element 60 ist in dem Auslasselement 45 aufgenommen. Das Auslasselement 45 ist im Anschluss an das Mischergehäuse 2 angeordnet und einstückig mit dem Mischergehäuse 2 ausgebildet. Das Mischergehäuse 2 enthält einen ersten Hohlraum 47, der als geschlossener Kanal für die Füllmasse dient. Der erste Hohlraum 47 geht in den zweiten Hohlraum 48 über, der das rohrförmige Element 60 enthält. Das rohrförmige Element 60 ist teilweise in dem zweiten Hohlraum 48 aufgenommen und ragt über die Austrittsöffnung 70 des Auslasselements 45 hinaus. Das rohrförmige Element 60 enthält einen geschlossenen Kanal 56, welcher zur Förderung der Füllmasse vom ersten oder zweiten Hohlraum 47, 48 zur Mündungsöffnung 61 des Kanals 56 führt.

Das rohrförmige Element 60 ist biegbar und ist in der Fig. 12 mit einer Krümmung gezeigt. Hierdurch kann die Lage der Mündungsöffnung 61 des rohrförmigen Elements 60 relativ zum statischen Mischer 1 verändert werden.

Insbesondere enthält das rohrförmige Element 60 ein Biegeelement 62, welches derart ausgebildet ist, dass das Biegeelement eine gefaltete Struktur 75 aufweist. Die gefaltete Struktur 75 umfasst in einem Axialschnitt gesehen eine Zacke 76 eines Zick-Zack Profils, welches in diesem Ausführungsbeispiel die gefaltete Struktur ausbildet. Diese Zacke 76 besteht aus einer ersten Seite 77 und einer zweiten Seite 78 und einer Kante 79, die von den beiden Seiten 77, 78 eingeschlossen ist. Die Kante 79 soll fortan als Bergkante bezeichnet werden. In der Regel sind eine Mehrzahl dieser Zacken 76 aneinander gereiht und bilden derart die gefaltete Struktur 75. Benachbarte Zacken 76, 86 sind über eine Kante 80 verbunden, welche das rechtsseitige Ende 81 der linksseitig angeordneten ersten Zacke 76 mit dem linksseitigen Ende 82 der rechtsseitig angeordneten zweiten Zacke 86 verbindet. Die Begriffe linksseitig und rechtsseitig beziehen sich hierbei auf die Darstellung in Fig. 12, sollen aber nur der Erläuterung dienen und in keiner Weise derart interpretiert werden, als dass sie auf die Lage in der Zeichnung in irgendeiner Weise beschränkt seien. Diese Kante 80 soll im weiteren Text als Talkante bezeichnet werden. Somit folgt im Bereich des Biegeelements eine erste Bergkante 79 auf eine erste Talkante 80 und eine zweite Talkante 83 schliesst dann die erste Talkante 80 an. Zwischen der ersten Talkante 80 und der zweiten Talkante 83 erstreckt sich die erste Zacke 76. Auf die erste Zacke 76 folgt eine zweite Zacke 86, die von der zweiten Talkante 83 und einer dritten Talkante 85 begrenzt ist. Zwischen der zweiten Talkante 83 und der dritten Talkante 85 erhebt sich die zweite Bergkante 84 der zweiten Zacke 86. Entlang jeder der Kanten 79, 80, 83, 84, 85 wird der Mantel des rohrförmigen Elements 60 geknickt. Die Wandstärke der Kanten 79, 80, 83, 84, 85 entspricht dabei im wesentlichen der Wandstärke der Seiten 77, 78. Wird das Biegeelement während der Herstellung des rohrförmigen Elements bereits gefertigt, kann die Wandstärke der gefalteten Struktur beliebig eingestellt werden. Die Wandstärke kann insbesondere derart gewählt werden, dass im gefalteten Zustand das rohrförmige Element sich entlang einer geraden Längsachse erstreckt und stabil in der geraden Lage verbleibt. Diese Art der Herstellung eignet sich insbesondere für rohrförmige Elemente, welche im Spritzgiessverfahren in einem einzigen Arbeitsschritt hergestellt werden, was jedoch nicht erfindungsgemäß ist.

Die gefaltete Struktur 75 kann alternativ dazu auch nach Fertigstellung des Biegeelements 62 durch plastische Verformung des rohrförmigen Elements 60 nachträglich aufgebracht werden. In diesem Fall wird das rohrförmige Element bei einer nicht erfindungsgemäßen Ausführungsform durch Extrusion oder bei einer erfindungsgemäßen Ausführungsform durch ein entsprechendes kontinuierliches

Herstellungsverfahren für ein Halbzeug aus einem metallischen Werkstoff hergestellt, welches im Anschluss auf die gewünschte Länge zugeschnitten wird und die gefaltete Struktur im Anschluss mittels eines Umformverfahrens aufgebracht werden kann, welches ein Präge- oder Pressverfahren umfassen kann. Für rohrförmige, nicht erfindungsgemäße Elemente aus Kunststoff kann hingegen alternativ dazu die gefaltete Struktur unmittelbar im Anschluss an die Extrusion des rohrförmigen Elements 60 aufgebracht werden.

Die gefaltete Struktur 75 bewirkt, dass das rohrförmige Element 60 eine gerade Längsachse 87 aufweist, solange keine Kräfte auf das rohrförmige Element aufgebracht werden, mittels welchen eine Krümmung erzeugbar ist. Werden hingegen Biegekräfte auf das Biegeelement aufgebracht, die normal zur Längsachse gerichtet sind oder zumindest Kraftkomponenten in der Normalrichtung zur Längsachse aufweisen, so wird die gerade Längsachse im Bereich des Biegeelements gekrümmt. Durch die Einwirkung der Biegekräfte kann sich das Biegeelement in den Kanten der Falten plastisch verformen, sodass die Biegung des Biegeelements irreversibel ist und das Biegeelement in der gekrümmten Stellung verharrt. Durch die umlaufende gefaltete Struktur ist zudem eine Knickstabilität gewährleistet. Das heisst, dass die innere Querschnittsfläche des rohrförmigen Elements 60 im Bereich des Biegeelements 62 nicht wesentlich von der inneren Querschnittsfläche der ersten und zweiten Abschnitte 88, 89 abweicht, die sich an das Biegeelement anschliessen.

In Ergänzung zu den vorhergehenden Ausführungen zu einem Biegeelement 62, das eine gefaltete Struktur 75 umfasst, kann auch vorgesehen werden, dass die gefaltete Struktur unter einer Vorspannung gehalten wird.

Insbesondere wenn der zwischen zwei benachbarten Seiten 77, 78 eingeschlossene Winkel klein wird, also gegen null geht, kann eine Vorspannkraft während der Herstellung des rohrförmigen Elements aufgebracht werden, welche die Zacken 76, 86 in einer eng anliegenden Stellung zueinander hält. Das heisst, die Abstände zwischen benachbarten Zacken sind derart gering, dass die Zacken sich aufeinander stützen. Dies ist in Fig. 12 für die beiden Zacken gezeigt, die unmittelbar an den ersten Abschnitt 88 anschliessen.

Wenn eine Krümmung auf das Biegelement aufgebracht werden soll, und diese Krümmung des Biegeelements beibehalten werden soll, solange der Austrag der Füllmasse erfolgt, dann wird die Vorspannkraft durch Aufbringen einer Zugkraft überwunden. Durch das Aufbringen einer Zugkraft wird der Winkel, den benachbarte Seiten 77, 78 zueinander einschliessen, vergrössert. Die benachbarten Seiten können sich nunmehr nicht mehr aneinander abstützen und können eine Krümmung nicht mehr behindern. Dann wird eine Kraft aufgebracht, um die gewünschte Krümmung einzustellen. Durch diese Kraft kann sich das Material zumindest in einem Teil der Kanten 79, 80, 83, 84, 85 lokal plastisch verformen, sodass die einmal aufgebrachte Krümmung des Biegeelements beibehalten wird. Insbesondere soll sich zumindest für die Dauer des Austrags der Füllmasse die Krümmung nicht ändern, das heisst, der Krümmungsradius und der Winkel, den die beiden sich vom Biegeelement erstreckenden ersten und zweiten Abschnitte 88, 89 des rohrförmigen Elements zueinander einschliessen.

Das rohrförmige Element 60 weist des weiteren eine Aufweitung 57 des Kanals 56 im Bereich der Eintrittsöffnung 65 auf. Diese Aufweitung 57 dient der Fixierung des rohrförmigen Elements 60 im Auslasselement 45. Das rohrförmige Element 60 wird fest in dem Hohlraum 48 gehalten und kann insbesondere unter dem Druck der Füllmasse nicht aus dem zweiten Hohlraum 48 ausgeschoben werden. Der Innendurchmesser des zweiten Hohlraums 48 kann zumindest in dem der Austrittsöffnung 70 benachbarten Bereich kleiner als der Aussendurchmesser des rohrförmigen Elements 60 sein, sodass sich eine Presspassung ergibt.

Beim Zusammenbau wird das rohrförmige Element 60 von der Mischerseite her in den zweiten Hohlraum 48 eingesteckt. Dann wird das rohrförmige Element mittels eines Montagewerkzeugs unter Aufwendung einer Druckkraft, beispielsweise durch einen oder einer Serie von Stössen durch den zweiten Hohlraum 48 durchgetrieben, bis das rohrförmige Element zu einem grossen Teil aus der Austrittsöffnung 70 hinausragt. Dabei kann die Aufweitung 57 zur Zentrierung des Montagewerkzeugs und zur Übertragung der Stosskraft dienen.

Alternativ dazu, jedoch nicht erfindungsgemäß kann das rohrförmige Element 60 nach einem der vorhergehenden Ausführungsbeispiele auch in das Werkzeug für das Auslasselement 45 bzw. das Mischergehäuse 2 eingelegt werden. Das rohrförmige Element 60 wird in diesem Fall umspritzt, das heisst, während des Spritzgiessverfahrens von einer Kunststoffschmelze umgeben, die anschliessend abgekühlt wird. Nach dieser Variante wird das rohrförmige Element 60 somit in einem einzigen Arbeitsschritt gemeinsam mit der Herstellung des Mischergehäuses eingesetzt. Mit diesem Verfahren kann auch sichergestellt werden, dass die Querschnittsfläche des rohrförmigen Elements 60 an der Eintrittsöffnung gleich wie die Querschnittsfläche des zweiten Hohlraums 48 an dieser Stelle ist.

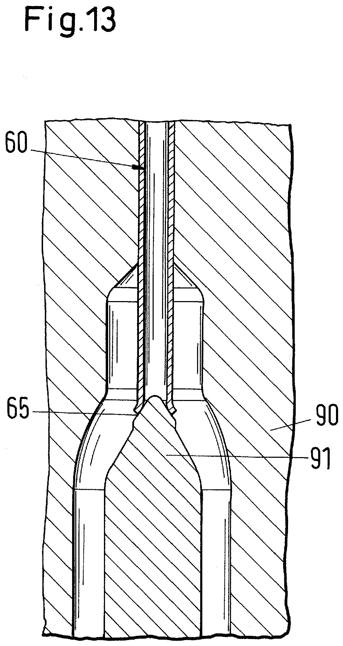

Eine weitere, jedoch nicht erfindungsgemäße Variante ist in Fig. 13 gezeigt. Das rohrförmige Element 60 wird ohne Aufweitung 57 in das Werkzeug 90 für das Mischergehäuses 2 gelegt, was in Fig. 13 dargestellt ist. Die Eintrittsöffnung 65 des rohrförmigen Elements 60 wird von einem Werkzeugdorn 91 erfasst, der beweglich ist. Wenn das Werkzeug 90 oder der Werkzeugdorn 91 derart bewegt werden, dass die herzustellende Form des Mischergehäuses erhalten wird, wird der Werkzeugdorn in die Eintrittsöffnung 65 des rohrförmigen Elements eingeführt. Während dieser Bewegung des Werkzeugdorns oder des Werkzeugs wird die Eintrittsöffnung des rohrförmigen Elements gedehnt, das Material des rohrförmigen Elements also einer plastischen Verformung unterzogen. Diese Variante hat den Vorteil, dass ein vorgängiger oder nachträglicher Arbeitsschritt des Aufweitens entfallen kann, da das Aufweiten bereits während der Herstellung des Mischergehäuses und des Auslasselements erfolgen kann.

Alternativ dazu, jedoch nicht erfindungsgemäß ist es möglich, das rohrförmige Element 60 nach einem der vorhergehenden Ausführungsbeispiele mittels einer Schnappverbindung , mittels einer Klebeverbindung oder mittels einer Halteverbindung im zweiten Hohlraum zu befestigen und zu halten.

Des weiteren, jedoch wiederum nicht erfindungsgemäß kann das rohrförmige Element 60 nach einem der vorhergehenden Ausführungsbeispiele relativ zum statischen Mischer drehbar angeordnet sein, es sei denn es wäre mit einer Klebeverbindung befestigt.

## Patentansprüche

1. Vorrichtung zum Einspritzen einer fluiden Füllmasse umfassend einen statischen Mischer (1),
- wobei der statische Mischer (1) ein Gehäuse (2) aufweist, welches einen ersten Hohlraum (47) einschließt
- wobei in dem ersten Hohlraum (47) mindestens ein Mischelement (3) zum Mischen der fluiden Füllmasse angeordnet ist, wobei das Gehäuse (2) ein Auslasselement (45) aufweist,
- wobei das Auslasselement (45) einen zweiten Hohlraum (48) aufweist,
- wobei der zweite Hohlraum (48) derart mit dem ersten Hohlraum (47) verbunden ist, dass die fluide Füllmasse vom ersten Hohlraum (47) in den zweiten Hohlraum (48) leitbar ist,
- wobei in dem zweiten Hohlraum (48) ein rohrförmiges Element (60) aus Metall gehalten ist,
- wobei das rohrförmige Element (60) in dem als Befestigungselement dienenden Gehäuse (2) aufgenommen ist und
- wobei das rohrförmige Element (60) im Bereich seiner Eintrittsöffnung eine Aufweitung (57, 58) zur Fixierung des rohrförmigen Elements (60) im Auslasselement (45) aufweist,
wobei das Auslasselement (45) einstückig mit dem Gehäuse (2) ausgebildet ist,
wobei der zweite Hohlraum zumindest über einen Teil seiner Länge einen Innendurchmesser aufweist, der kleiner als der Außendurchmesser des rohrförmigen Elements ist,
wobei das rohrförmige Element mittels Presspassung in dem zweiten Hohlraum gehalten ist.

2. Vorrichtung nach Anspruch 1,
wobei das rohrförmige Element (60) einen Außendurchmesser von maximal 3 mm, bevorzugt maximal 2.5 mm, besonders bevorzugt maximal 1.5 mm aufweist.

3. Vorrichtung nach Anspruch 1 oder 2,
wobei das rohrförmige Element (60) eine Länge von maximal 100 mm, bevorzugt von maximal 50 mm, besonders bevorzugt von maximal 30 mm aufweist.

4. Vorrichtung nach einem der vorhergehenden Ansprüche,
wobei das Auslasselement (45) einen Konus (46) umfasst.

5. Vorrichtung nach einem der vorhergehenden Ansprüche,
wobei der zweite Hohlraum (48) zumindest abschnittsweise konisch ausgebildet ist.

6. Vorrichtung nach einem der vorhergehenden Ansprüche,
wobei der zweite Hohlraum (48) einen Innendurchmesser aufweist, der kleiner als der Außendurchmesser des rohrförmigen Elements (60) ist.

7. Vorrichtung nach einem der vorhergehenden Ansprüche,
wobei das rohrförmige Element (60) biegbar und/oder bezüglich des statischen Mischers (1) drehbar ist.

8. Vorrichtung nach Anspruch 7,
wobei das rohrförmige Element (60) zumindest ein Biegeelement (62) umfasst.

9. Vorrichtung nach einem der vorangehenden Ansprüche,
- wobei der zweite Hohlraum (48) zumindest abschnittsweise konisch ausgebildet ist und
- wobei der zweite Hohlraum (48) einen konischen Bereich an einer stromaufwärts gelegenen Stelle eines Einlasses (65) des röhrenförmigen Elements (60) aufweist.

## Claims

1. An apparatus for the injection of a fluid filler material comprising a static mixer (1),
- wherein the static mixer (1) has a housing (2) which includes a first hollow space (47);
- wherein at least one mixing element (3) is arranged in the first hollow space (47) for mixing the fluid filler material, with the housing (2) having an outlet element (45);
- wherein the outlet element (45) has a second hollow space (48);
- wherein the second hollow space (48) is connected to the first hollow space (47) such that the fluid filler material can be conducted from the first hollow space (47) into the second hollow space (48);
- wherein a tubular element (60) composed of metal is held in the second hollow space (48);
- wherein the tubular element (60) is received in the housing (2) serving as a fastening element; and
- wherein the tubular element (60) has a widened portion (57, 58) in the region of its inlet opening for fixing the tubular element (60) in the outlet element (45);
- wherein the outlet element (45) is formed in one piece with the housing (2);
- wherein the second hollow space has an inner diameter at least over a part of its length which is smaller than the outer diameter of the tubular element; and
- wherein the tubular element is held in the second hollow space by means of a press fit.

2. An apparatus in accordance with claim 1,
wherein the tubular element (60) has an outer diameter of a maximum of 3 mm, preferably of a maximum of 2.5 mm, particularly preferably of a maximum of 1.5 mm.

3. An apparatus in accordance with claim 1 or claim 2,
wherein the tubular element (60) has a length of a maximum of 100 mm, preferably of a maximum of 50 mm, particularly preferably of a maximum of 30 mm.

4. An apparatus in accordance with any one of the preceding claims,
wherein the outlet element (45) comprises a cone (46).

5. An apparatus in accordance with any one of the preceding claims,
wherein the second hollow space (48) is made conically at least sectionally.

6. An apparatus in accordance with any one of the preceding claims,
wherein the second hollow space (48) has an inner diameter which is smaller than the outer diameter of the tubular element (60).

7. An apparatus in accordance with any one of the preceding claims,
wherein the tubular element (60) is bendable and/or is rotatable with respect to the static mixer (1).

8. An apparatus in accordance with claim 7,
wherein the tubular element (60) comprises at least one bending element (62).

9. An apparatus in accordance with any one of the preceding claims,
- wherein the second hollow space (48) is made conically at least sectionally; and
- wherein the second hollow space (48) has a conical region at a point of an inlet (65) of the tubular element (60) disposed upstream.

## Revendications

1. Dispositif d'injection d'une masse de remplissage fluide, comportant un mélangeur statique (1),
dans lequel
- le mélangeur statique (1) comprend un boîtier (2) qui enferme une première cavité (47),
- au moins un élément de mélange (3) est disposé dans la première cavité (47) pour mélanger la masse de remplissage fluide, le boîtier (2) comprenant un élément de sortie (45),
- l'élément de sortie (45) présente une seconde cavité (48),
- la seconde cavité (48) est reliée à la première cavité (47) de telle sorte que la masse de remplissage fluide peut être amenée depuis la première cavité (47) jusque dans la seconde cavité (48),
- un élément tubulaire (60) en métal est retenu dans la seconde cavité (48),
- l'élément tubulaire (60) est reçu dans le boîtier (2) servant d'élément de fixation, et
- l'élément tubulaire (60) présente, au niveau de son ouverture d'entrée, un évasement (57, 58) pour fixer l'élément tubulaire (60) dans l'élément de sortie (45),
et dans lequel
l'élément de sortie (45) est réalisé d'un seul tenant avec le boîtier (2), au moins sur une partie de sa longueur, la seconde cavité présente un diamètre intérieur inférieur au diamètre extérieur de l'élément tubulaire, l'élément tubulaire est retenu par ajustement serré dans la seconde cavité.

2. Dispositif selon la revendication 1,
dans lequel
l'élément tubulaire (60) présente un diamètre extérieur au maximum de 3 mm, de préférence au maximum de 2,5 mm, de manière particulièrement préférée au maximum de 1,5 mm.

3. Dispositif selon la revendication 1 ou 2,
dans lequel
l'élément tubulaire (60) présente une longueur au maximum de 100 mm, de préférence au maximum de 50 mm, de manière particulièrement préférée au maximum de 30 mm.

4. Dispositif selon l'une des revendications précédentes,
dans lequel
l'élément de sortie (45) comprend un cône (46).

5. Dispositif selon l'une des revendications précédentes,
dans lequel
la seconde cavité (48) est réalisée au moins localement conique.

6. Dispositif selon l'une des revendications précédentes,
dans lequel
la seconde cavité (48) présente un diamètre intérieur inférieur au diamètre extérieur de l'élément tubulaire (60).

7. Dispositif selon l'une des revendications précédentes,
dans lequel
l'élément tubulaire (60) peut être fléchi et/ou tourné par rapport au mélangeur statique (1).

8. Dispositif selon la revendication 7,
dans lequel
l'élément tubulaire (60) comprend au moins un élément de flexion (62).

9. Dispositif selon l'une des revendications précédentes,
dans lequel
- la seconde cavité (48) est réalisée au moins localement conique, et
- la seconde cavité (48) présente une zone conique à un emplacement amont d'une entrée (65) de l'élément tubulaire (60).
